(19) Europäisches Patentamt
European Patent Office
Office européen des brevets

(11) **EP 4 749 396 A1**

(12) **EUROPEAN PATENT APPLICATION**

(43) Date of publication:
27.05.2026 Bulletin 2026/22

(21) Application number: 25218510.3

(22) Date of filing: 25.11.2025

(51) International Patent Classification (IPC):
*G06F 1/26* (2006.01)     *G06F 1/28* (2006.01)

(52) Cooperative Patent Classification (CPC):
G06F 1/26; G06F 1/266; G06F 1/28

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.11.2024 US 202463725274 P
24.11.2025 US 202519399325

(71) Applicant: **Vertiv Corporation**
Westerville, OH 43082 (US)

(72) Inventor: **FERGUSON, Kevin R.**
Westerville, 43082 (US)

(74) Representative: **Bryn-Jacobsen, Caelia et al**
Kilburn & Strode LLP
Lacon London
84 Theobalds Road
London WC1X 8NL (GB)

(54) **VISUALIZATION FILTER FOR DYNAMIC LOAD MONITORING**

(57) A system and method for filtered visualization of dynamic load monitoring via a power distribution unit (PDU) collects power measurement data measured from each end device plugged into, and drawing operating power from, the PDU. The PDU collects the power measurement data into power state data over a line cycle or series of time intervals. Within the PDU, Kalman filtering determines a current power state estimate based on the measured power state data balanced with predictions of subsequent power state, as well as tuning parameters defining the balance from line cycle to line cycle. The resulting power state estimate may be displayed or presented to provide a more intuitive representation of operating power drawn by the end devices as opposed to raw power measurement data, which may be subject to fluctuation caused by high performance/AI pulsing loads.

EP 4 749 396 A1

# Description

## CROSS-REFERENCE TO RELATED APPLICATIONS

The present application claims the benefit under 35 U.S.C. § 119(e) of U.S. Provisional Patent Application Serial Number 63/725,274, filed November 26, 2024 and titled VISUALIZATION FILTER FOR DYNAMIC LOAD MONITORING.

## TECHNICAL FIELD

The present disclosure is directed power distribution units for supplying operating power to servers and other appropriate information technology (IT) devices.

## BACKGROUND

Facility and rack-mounted power distribution units (PDU, also rack PDU (rPDU)) provide operating power to power supply units (PSU) which in turn provide operating power to servers and other information technology (IT) devices plugged into the PSU. Servers dedicated to high performance computing (HPC) and/or artificial intelligence (AI) applications may exhibit highly dynamic power consumption patterns, e.g., during AI model training and inference, and the PDUs must monitor total consumption lest it overload the load capacity of the PDU. However, visual and/or graphic representations of HPC/AI dynamic power consumption patterns may present as noisy and not easily interpreted, especially for users unfamiliar with the characteristics of HPC/AI workloads.

## BRIEF DESCRIPTION OF THE DRAWINGS

The detailed description is described with reference to the accompanying figures. The use of the same reference numbers in different instances in the description and the figures may indicate similar or identical items. Various examples or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:

FIG. 1 is a block diagram illustrating a power distribution unit (PDU) configured for filtered visualization of dynamic load monitoring according to examples of the inventive concepts disclosed herein;

FIG. 2 is a block diagram illustrating Kalman filter (KF) operations of the PDU of FIG. 1;

FIG. 3 is a graphical illustration of filtered visualizations generated by the PDU of FIG. 1 compared to conventional load monitoring visualizations; and

FIGS 4A and 4B are flow diagram illustrating a method for filtered visualization of dynamic load monitoring according to examples of the inventive concepts disclosed herein.

## SUMMARY

In a first aspect, a power distribution unit (PDU) is disclosed. In examples, the PDU may include a power input capable of receiving a power source (e.g., alternating current (AC)) and one or more power outlets or sockets via which connected end devices (e.g., servers, switches, other information technology (IT) devices) may plug into the PDU and receive operating power therefrom. Further, each power outlet may include a power sensor for sensing power measurement data (e.g., current and/or voltage associated with the operating power drawn) to the respective end device at each of a sequence of N consecutive line cycles (each line cycle corresponding to a time $t(N)$.) In examples, the PDU may include a controller including one or more processors and a memory or other data storage for encoded instructions. The processor/s may be configurable via the encoded instructions for receiving the sensed power measurement data from each power sensor. For each time $t(M)$ of the time sequence (e.g., where $0 \leq M < N$), Kalman filters (KF) predict a power state for the set of connected end devices at the next line cycle (e.g., the total power draw to all devices relative to the total power capacity of the PDU at time $t(M + 1)$). Further, the Kalman filters may update the gain via which the predicted power state and actual sensed power measurement data are weighted in estimating the power state at the next line cycle $t(M + 1)$. Further still, the Kalman filters may receive the sensed power measurement data for the next line cycle. Based on the sensed power measurement data, the previously predicted power state, and the updated gain, the KF provides a revised estimate of the power state for the next line cycle at time $t(M + 1)$.

In some examples, the Kalman filters may update the tuning parameters.

In some examples, the updated tuning parameters include Kalman filter coefficients of variation.

In some examples, the Kalman filters may update the gain each line cycle but update the tuning parameters only every second, third, or Pth line cycle (where $2 \leq P < N$).

In some examples, the revised power state estimate includes an estimated uncertainty, e.g., based on the updated coefficient of variance or other tuning parameter.

In some examples, the revised power state estimate includes statistical data, e.g., the updated tuning parameter; minimum, maximum, or mean power draws; and/or a standard deviation based on the received power measurement data.

In some examples, the received power measurement data includes real power, apparent power, and/or root mean square (RMS) values for current and/or voltage.

In some examples, the PDU includes a display unit capable of displaying, e.g., in graphic format, the revised power state estimate (for the subsequent time t(M + 1), over the time sequence t(0) ... t(N)).

In some examples, the PDU includes a communications port capable of transmitting the revised power state estimate to remote users via wireless and/or wired networks.

In a further aspect, a method for filtered visualization of dynamic load monitoring via a power distribution unit (PDU) is disclosed. In examples, the method may include sensing (for each of a time sequence of N line cycles, where each line cycle is a time t(N)) power measurement data, e.g., power draw (e.g., current, voltage) to each of a set of connected end devices (servers, switches, other IT devices) connected to the PDU via power sensors in each power outlet via which an end device is connected. The method may include collecting the sensed power measurement data via a controller of the PDU. The method may include predicting at a line cycle t(M) of the time sequence (where $0 \leq M < N$) and via Kalman filters (KF) executing on the controller, a power state (e.g., a power draw capacity for the set of end devices relative to the total power capacity of the PDU) for the next line cycle at t(M + 1). The method may include updating a gain of the Kalman filters, where the gain determines the weighting of the predicted power state vs. sensed power measurement data in estimating the power state for the next line cycle at t (M + 1). The method may include receiving, via the Kalman filters, the sensed power measurement data for the next line cycle at t(M + 1). The method may include estimating, via the Kalman filters and based on the updated gain, a revised power state for the next line cycle at t(M + 1).

In some examples, the method includes updating tuning parameters of the Kalman filters.

In some examples, the method includes updating Kalman filter coefficients of variation.

In some examples, the method includes updating the Kalman gain for each line cycle of the time sequence, but updating the tuning parameters only at each second, third, or Pth line cycle (e.g., where $2 \leq P < N$).

In some examples, the method includes determining an estimated uncertainty of the revised estimated power state based on the updated tuning parameter.

In some examples, the method includes determining statistical data based on the received power measurement data. For example, the statistical data may include minimum, maximum, and/or mean power draws, and/or a standard deviation of the power measurement data.

In some examples, the method includes receiving the power measurement data in terms of real power, apparent power, and/or root mean square (RMS) current or voltage values.

In some examples, the method includes presenting to a user, via a graphic display, the revised estimated power state for the next line cycle t(M + 1) and/or over the time sequence t(0) ... t(N).

In some examples, the method includes transmitting the revised estimated power state to a remote user via a communications port of the PDU, the communications port connecting the PDU to wired and/or wireless networks.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

DETAILED DESCRIPTION

Before explaining one or more examples of the disclosure in detail, it is to be understood that the examples are not limited in their application to the details of construction and the arrangement of the components or steps or methodologies set forth in the following description or illustrated in the drawings. In the following detailed description of examples, numerous specific details may be set forth in order to provide a more thorough understanding of the disclosure. However, it will be apparent to one of ordinary skill in the art having the benefit of the instant disclosure that the examples disclosed herein may be practiced without some of these specific details. In other instances, well-known features may not be described in detail to avoid unnecessarily complicating the instant disclosure.

As used herein a letter following a reference numeral is intended to reference an example of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of examples disclosed herein. This is done merely for convenience and "a" and "an" are intended to include "one" or "at least one," and the singular also includes the plural unless it is obvious that it is meant otherwise.

Finally, as used herein any reference to "one example" or "some examples" means that a particular element, feature, structure, or characteristic described in connection with the example is included in at least one example disclosed herein. The appearances of the phrase "in some examples" in various places in the specification are not necessarily all referring to the same example, and examples may include one or more of the features expressly described or inherently present herein, or any combination or sub-combination of two or more such features, along with any other features which may not necessarily be expressly described or inherently present in the instant disclosure.

Broadly speaking, examples of the inventive concepts disclosed herein are directed to filtered visualization of PDU monitoring data with respect to highly dynamic load demands (e.g., characteristic of HPC/AI workload processing), such that current RMS and power measurements are presented in a visually stable and more intuitive fashion. In particular, Kalman filtering of measurement data may track the measurement dynamics of HPC/AI workloads faster than conventional approaches, balancing measured load states and estimated load states as current load demands become more or less dynamic.

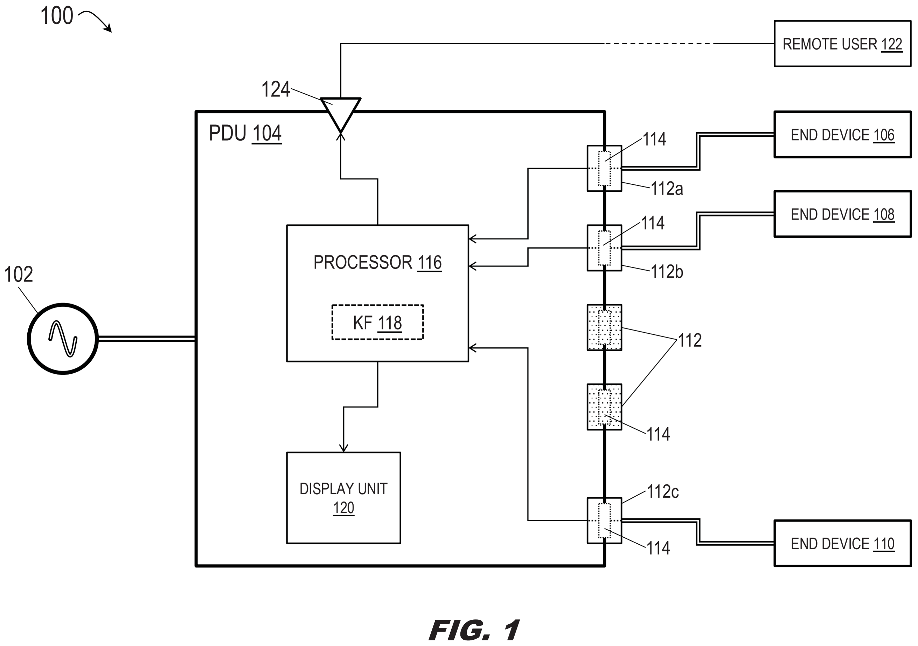

Referring to FIG. 1, a data center environment 100 is shown. For example, the data center environment 100 may include alternating current (AC) power source 102, power distribution unit 104 (PDU, rack PDU (rPDU)), and end devices 106, 108, 110.

In examples, the PDU 104 may include sockets 112 (e.g., outlets) via which the end devices 106, 108, 110 may connect the PDU 104 and draw operating power therefrom. For example, each of the end devices 106, 108, 110 may be plugged into a socket 112a, 112b, 112c respectively, while some sockets 112 may remain dormant without a device plugged thereinto. Each of the end devices 106, 108, 110 may draw a current load from the PDU, and the current load drawn by each end device may vary. In particular, HPC/AI workloads as described above may cause the current load demands of one or more of the end devices 106, 108, 110 to oscillate rapidly.

In examples, the PDU 104 may include sensors 114 for monitoring the power drawn by each end device 106, 108, 110. For example, each socket 112, 112a-112c may include a socket-level sensor 114 for monitoring any end device 106, 108, 110 connected to said socket; in other examples, sensors 114 may be disposed in the line between the PDU and a given end device. In examples, each sensor 114 may provide control processors 116 within the PDU 104 with power measurement data corresponding to its connected end device 112a-112c at a predetermined interval. For example, power measurement data may include an amperage and/or voltage (e.g., peak current $I_O$, peak voltage $V_O$) of the current load drawn by a particular end device 112a-112c at a measurement interval. In other examples, the control processors 116 may determine RMS values corresponding to the current load drawn by individual end devices 106, 108, 110. Similarly, the control processors 116 may determine power state data, or sensed power measurement data corresponding to the total current load drawn by all end devices 106, 108, 110 at any measurement interval, as well as a capacity level, e.g., a proportion of the total current capacity of the PDU 104 represented by the load state. For example, power state data may include real power (W), apparent power (VA), and/or RMS (root mean square) values for current and/or voltage (e.g., $I_{RMS}$, $V_{RMS}$).

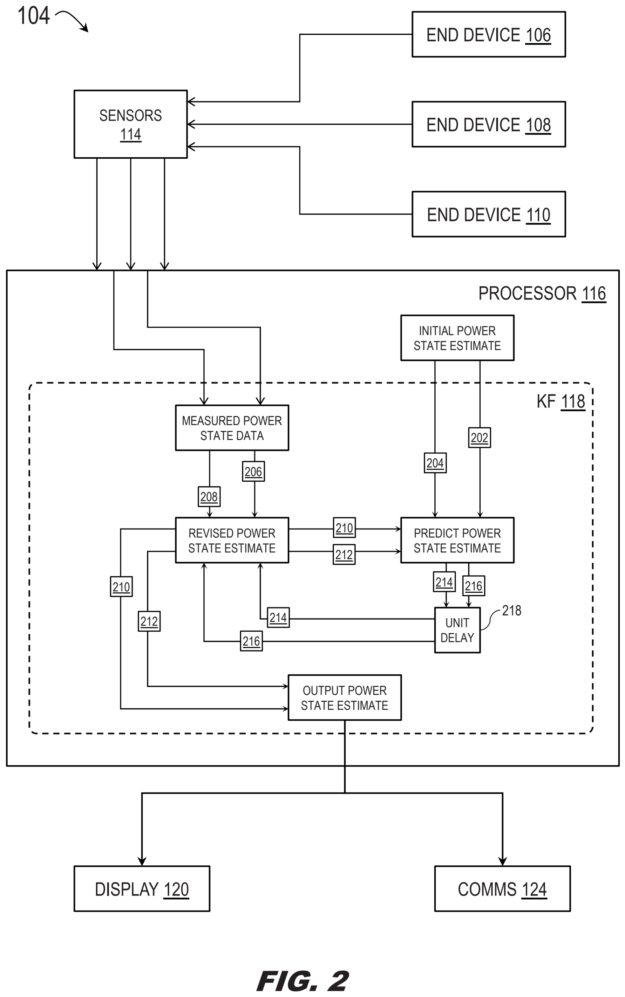

In examples, one or more Kalman filters 118 may be configured for execution on the control processors 116 (as shown in greater detail below by FIG. 2). For example, the Kalman filters 118 may be initialized, or seeded, with an initial estimate of the power state, e.g., a state estimate based on the operating power or load current drawn by all end devices 106, 108, 110 through one or more series of measurement intervals, e.g., one or more line cycles, as well as an estimated uncertainty associated with said initial estimate. In examples, the Kalman filters 118 may receive measured power state data over time (e.g., according to a sub-interval of the measurement time interval referenced above, i.e., the frequency with which the control processors 116 receive sensed power draw information, and based on power measurement data across a series or sequence of consecutive time intervals) and, based on the power state data and tuning parameters specific to the Kalman filters, provide predictive estimates of the power state and update current power state estimates (e.g., once current power measurement data for that interval are received) according to a weighted average. For example, the Kalman filters 118 may track highly dynamic load conditions more accurately than conventional infinite input response (IIR) filtering, as shown below.

In examples, power state estimates generated by the Kalman filters 118 may be output by the control processors 116 (as well as, e.g., the estimated uncertainty associated with the power state estimate). For example, the PDU 104 may include a display unit 120 capable of presenting graphical and/or visual representations of the power state estimates to a user. In some examples, the control processors 116 may transmit power state estimates, and/or graphical and/or visual representations thereof, to a remote user 122 via a communications port 124 of the PDU 104. For example, the communications port 124 may allow the control processors 116 to transmit power state estimates to, and/or receive control input from, the remote user 122 via one or more network protocols. Similarly, the display unit 120 may be a component of a human/machine interface (HMI) allowing a user physically present at the PDU to provide control input, e.g., via the display unit (if, for example, the display unit is a touchscreen) or via some other component of the HMI.

Referring now to FIG. 2, the PDU 104 is shown.

In examples, the Kalman filter 118 may initialize by providing an initial power state estimate 202, e.g., an initial estimate of the power state of the PDU 104 at an initialization time (for example, $t_0$). For example, the power state estimate at any sampling time $t_M$ (e.g., for each line cycle $t_M$ of a time sequence $t_0, t_1, ... t_M, t_{M+1}, ... t_N$) may represent the total current load or operating power drawn by all end devices (106, 108, 110; FIG. 1) connected to the PDU 104, based on power measurement data provided by the sensors 114 and provided to the control processor 116. Further, the initialization of the Kalman filter 118 may include an estimated uncertainty 204 of the initial power state estimate.

In examples, the control processor 116 may provide the Kalman filter 118 with measured power state data 206 (which may, e.g., include a measurement uncertainty 208) based on power measurement data sensed and submitted by the sensors 114 connected to each end device 106, 108, 110. For example, the Kalman filter 118 may incorporate a learned tuning parameter, e.g., coefficient of variation $\mathbf{CV} = \frac{\sigma}{\mu}$, to adapt the filter response for measurement variance $\sigma_m^2$ and estimate variance $\sigma_e^2$, (determining generally the extent to which measured power state data 206 and the initial power state estimate 202 (or subsequent predictions of the power state estimate, as described below) are weighted in determining a current power state estimate 210) which in turn may influence Kalman gain

$$K = \frac{\sigma_e^2}{\sigma_e^2 + \sigma_m^2}.$$

In examples, the tuning parameter $\mathbf{CV}$ may be updated at a less frequent interval relative to the collection of power measurement data and/or calculation of measured power state data 206. For example, each set of measured power state data 206 may correspond to a time series of $N$ consecutive line cycles (where $N$ is an integer not less than 2), where each line cycle represents a first time interval $t_0$ at which power measurement data are collected by the sensors 114, and the time series data correspond to the power measurement data sets collected at $t_0, t_1, ... t_N$. In examples, the tuning parameter $\mathbf{CV}$ may be updated at each time series, or may be updated less frequently, e.g., every two, three, or $P$ time series (where $P \geq 2$), in order to conserve computing power.

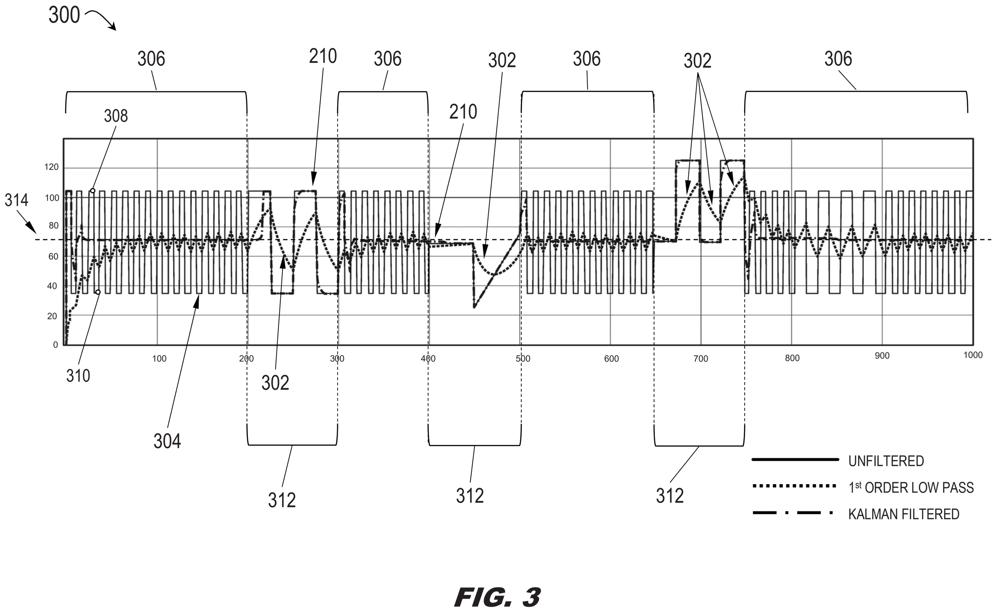

In examples, the Kalman filter 118 may incorporate the updated Kalman gain $K$ to estimate (e.g., predict, extrapolate) a current power state estimate 210 (e.g., filtered power state estimate) and estimated uncertainty 212 thereof. For example, the current power state estimate 210 may incorporate a weighted mean of the measured power state data 206 and the most recently predicted power state estimate 214 and estimated uncertainty 216 thereof. For example, starting with the initial power state estimate 202, the Kalman filter 118 may, in addition to determining a current power state estimate 210 at a time $t_M$, predict a subsequent power state estimate 214 for the subsequent time $t_{M+1}$. This predicted power state estimate 214, based on time $t_{M+1}$ but predicted at time $t_M$, may be delayed (218). Broadly speaking, the Kalman gain $K$ may represent a balance, e.g., between 0 and 1, as to whether the current power state estimate 210 should be weighted in favor of measurement (e.g., the measured power state data 206 provided by the control processor 116, consistent with rapid convergence toward steady state operations as illustrated by FIG. 3 below) or in favor of estimation or prediction (e.g., the most recent predicted power state estimate 214, consistent with convergence toward a mean value of the duty cycle).

In examples, the current power state estimate 210 and estimated uncertainty 212 may be retained by the Kalman filter 118 and used to predict the next iteration of the power state estimate 214 and estimated uncertainty 216.

In examples, the Kalman filter 118 may forward the current power state estimate 210 and estimated uncertainty 212 to the display unit 120 for presentation or to the communications port 124 for transmission or distribution (e.g., to a remote user (122, FIG. 1)).

In some examples, power state estimates 210 provided by the Kalman filter 118 may further include statistical data relevant to the underlying measured power state data 206 (e.g., power measurement data collected by sensors 114). For example, statistical data may include individual minima or maxima with respect to operating power/load current drawn by any individual end device 106, 108, 110 within a set of power measurement data collected at a particular time interval or over the time series thereof. Further, statistical data may include mean values, standard deviation, and/or CV with respect to the underlying set of measured power state data 206; e.g., based on the aggregate operating power/load current drawn by all end devices 106, 108, 110 at the particular time interval or over the time series thereof.

Referring now to FIG. 3, the graph 300 presents a graphic representation of the current power state estimate 210 (black line) relative to filtered power state estimates 302 according to conventional first order low-pass/infinite input response (IIR) filtering (grey line) and relative to unfiltered power state data 304 (light grey square wave; compare, e.g., filtered power state estimates 302 and unfiltered power state data 304 with measured power state data 206 (FIG. 2)).

In examples, machine learning (ML), artificial intelligence (AI), large language model (LLM), and/or other similar high performance computing (HPC) applications running on the end devices (106-110; see FIG. 1) may result in distinctive HPC/AI load cycles 306 (e.g.,

corresponding to sets of time series data (e.g., power measurement data) collected by PDU sensors 114 (see FIG. 1)) characterized by rapid oscillation between high load demands 308 (e.g., at, near, or in excess of 100% of the load capacity of the PDU (104; see FIG. 1)) and low load demands 310 (e.g., ~40% of the load capacity of the PDU). As such, unfiltered visualization or graphic representation (unfiltered power state data 304) with respect to HPC/AI load cycles 306 may appear noisy (and may defy or evade constructive interpretation) due to the rapid oscillation. However, unfiltered power state data 304 may track with reasonably high fidelity to steady-state operations during steady state duty cycles 312 where HPC/AI characteristic rapid oscillation of load demand is not present.

As can be seen in FIG. 3, conventional low-pass/IIR filtering may result in filtered power state estimates 302 that track HPC/AI load cycles 306 with improved fidelity to a mean value 314 of the duty cycle as opposed to unfiltered power state data 304, but may still fluctuate around a mean value without accurately tracking said mean value. Further, the filtered power state estimates 302 may trade improved fidelity with respect to HPC/AI load cycles 306 for a loss in fidelity with respect to converging toward steady state operations for steady state duty cycles 312 where HPC/AI characteristic load oscillation is not present.

In examples, the Kalman-filtered power state estimate 210 may converge rapidly and consistently to a mean value 314 of the duty cycle (e.g., ~70-72% of full load capacity of the PDU 104) during HPC/AI load cycles 306, significantly improving on the performance of the low-pass/IIR filtered power state estimates 302. Further, the Kalman-filtered power state estimate 210 may also converge rapidly and with high fidelity to steady state operations during steady state duty cycles 312.

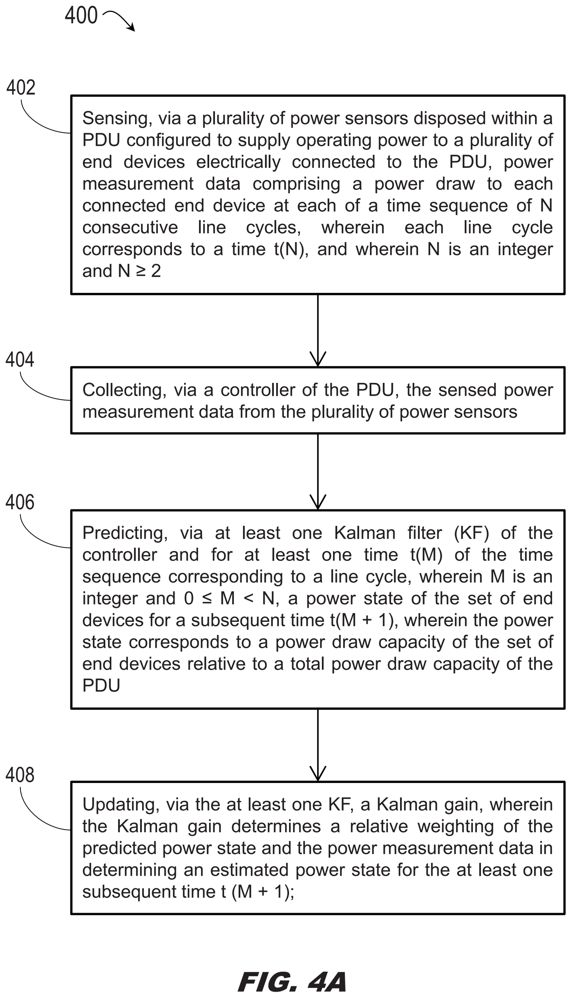

Referring now to FIG. 4A, a method 400 for filtered visualization of dynamic load monitoring may be implemented by the PDU 104 and may include the following steps.

At step 402, PDU sensors (e.g., current sensors, voltage sensors) collect power measurement data by sensing current load (operating power drawn) associated with each of a set of end devices connected to the PDU and receiving operating power therefrom.

At step 404, the PDU collects time series data from each of the sensors, e.g., the sensed power measurement data for each end device at each of a series or sequence of time intervals. In some examples, the power state data includes real power, apparent power, and/or RMS values (e.g., current and/or voltage). In some examples, power state data includes statistical measurements with respect to the underlying time series data, e.g., minimum, maximum, mean, standard deviation, coefficient of variation.

At step 406, the PDU estimates, via Kalman filters executing on the PDU controller and at a line cycle at time $t_M$ of the time sequence $t_0 \dots t_N$, a power state of the set of end devices (e.g., total load drawn by the set of end devices, proportion of the total load drawn relative to the load capacity of the PDU) at the next line cycle, e.g., at the subsequent time $t_{M+1}$.

At step 408, the PDU updates the gain of the Kalman filter. In some examples, the PDU updates the Kalman filter tuning parameter, e.g., the coefficient of variation driving the weighting of measured power state data and predicted power state data in the final estimation of the power state for the line cycle at time $t_{M+1}$. In some examples, the tuning parameter may be updated less frequently than the power state is estimated, e.g., at every second, third, or Pth line cycle (where $P \geq 2$).

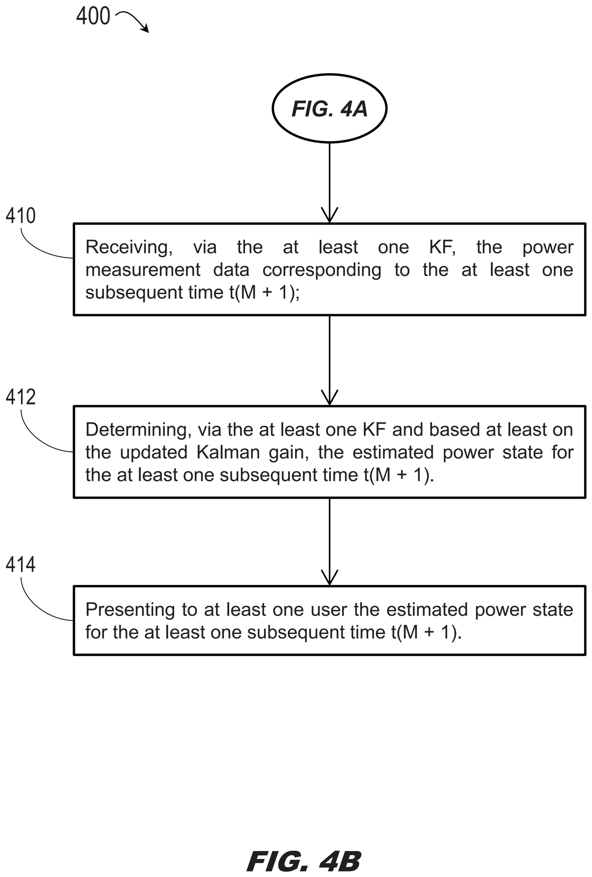

Referring also to FIG. 4B, at step 410 the PDU receives the sensed power measurement data for the line cycle at the time $t_{M+1}$.

At a step 412, the PDU Kalman filters revise the power state estimate for time $t_{M+1}$ based on the received power measurement data, the previously predicted power state (e.g., predicted at time $t_M$) and the updated gain and/or tuning parameter. For example, revised power state estimates may more accurately correspond to the current operating power (current load) provided to all end devices and capacity level (relative to PDU capacity) at the time $t_{M+1}$. In some examples, the revised power state estimate includes an uncertainty estimate.

The method 400 may include an additional step 414. At step 414, the PDU outputs the revised power state estimates. For example, the revised power state estimates may be displayed via a visual display of the PDU to a user disposed at the PDU. In some examples, the revised power state estimates are transmitted to a remote user according to one or more networks with which the PDU is in communication with or to which the PDU is connected.

CONCLUSION

It is contemplated that examples of the inventive concepts disclosed herein may have numerous advantages. For example, PDUs may be able to provide more accurate and intuitive representation of real time power state conditions throughout HPC/AI duty cycles as well as steady state operations.

Those having skill in the art will recognize that the state of the art has progressed to the point where there is little distinction left between hardware and software implementations of aspects of systems; the use of hardware or software is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be implemented (e.g., hardware, software, and/or firmware), and that the preferred vehicle will vary with the context in which the processes and/or systems and/or other technologies are deployed.

For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be implemented, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically-oriented hardware, software, and or firmware.

The foregoing detailed description has set forth various examples of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one example, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the examples disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and/or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link, etc.).

In a general sense, those skilled in the art will recognize that the various aspects described herein which can be implemented, individually and/or collectively, by a wide range of hardware, software, firmware, or any combination thereof can be viewed as being composed of various types of "electrical circuitry." Consequently, as used herein "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of random access memory), and/or electrical circuitry forming a communications device (e.g., a modem, communications switch, or optical-electrical equipment). Those having skill in the art will recognize that the subject matter described herein may be implemented in an analog or digital fashion or some combination thereof.

Those having skill in the art will recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further examples are set out in the clauses below:

    1. A power distribution unit (PDU), comprising:

        at least one power input connectible to an alternating current (AC) power source and configured to receive input power therefrom;

        at least one power outlet, each power outlet electrically couplable to an end device of a plurality of connected end devices and configured for providing a power draw to the connected end device,

        the at least one power outlet including at least one power sensor configured to sense the power draw to the connected end device at each of a time sequence of N consecutive line cycles, wherein each line cycle corresponds to a time $t(N)$,

        and wherein N is an integer and $N \geq 2$;

        a controller operatively coupled to the at least one power sensor, the controller including at least one processor; and

        a memory configured for storage of encoded instructions, the at least one processor configurable by the encoded instructions to:

            receive power measurement data comprising the power draw sensed by each power sensor;

            predict, via at least one Kalman filter (KF) configured for execution on the at least one processor and for at least one time $t(M)$ of the time sequence, a power state of the plurality of end devices corresponding to a subsequent time $t(M + 1)$,

            wherein M is an integer and $0 \leq M < N$, and wherein the power state corresponds to a power draw capacity of the plurality of end devices relative to a total power draw capacity of the PDU;

            update, via the at least one KF, a Kalman gain, wherein the Kalman gain determines a relative weighting of the predicted power state and the sensed power measurement data in estimating the power state for the at least one subsequent time $t(M + 1)$;

            receiving, via the at least one KF, the power measurement data corresponding to the at least one subsequent time $t(M + 1)$; and

            determining, via the at least one KF and based at least on the updated Kalman gain, the estimated power state corresponding to the at least one subsequent time $t(M + 1)$.

2. The PDU of Clause 1, wherein the at least one processor is configurable via the encoded instructions for updating at least one tuning parameter of the at least one Kalman filter.

3. The PDU of Clause 2, wherein the at least one tuning parameter includes a coefficient of variation.

4. The PDU of Clause 2 or 3, wherein the at least one processor is configurable via the encoded instructions for: updating the Kalman gain at each line cycle of the time sequence; band updating the at least one tuning parameter every P line cycles, wherein P is an integer and $P \geq 2$.

5. The PDU of Clause 4, wherein the estimated power state includes an estimated uncertainty based on at least the updated tuning parameter.

6. The PDU of Clause 4 or 5, wherein the estimated power state includes statistical data, the statistical data including at least one of:

    the updated tuning parameter;
    a minimum power draw;
    a maximum power draw;
    a mean power draw; or
    a standard deviation associated with the power measurement data.

7. The PDU of any one of the preceding clauses, wherein the sensed power measurement data includes at least one of a real power, an apparent power, a root mean square (RMS) current, or an RMS voltage.

8. The PDU of any one of the preceding clauses, further comprising:

    at least one display unit coupled to the controller; and
    wherein the at least one display unit is configured to display the estimated power state corresponding to the at least one subsequent time $t(M + 1)$.

9. The PDU of any one of the preceding clauses, further comprising:

at least one communications port coupled to the controller and to at least one network; and wherein the at least one communications port is configured to transmit the estimated power state corresponding to the at least one subsequent time t(M + 1) to at least one remote user via the at least one network.

10. A method for filtered visualization of dynamic load monitoring, the method comprising:

sensing, via a plurality of power sensors disposed within a power distribution unit (PDU) configured to supply operating power to a plurality of end devices electrically connected to the PDU, power measurement data comprising a power draw to each connected end device at each of a time sequence of N consecutive line cycles,
wherein each line cycle corresponds to a time t(N), and
wherein N is an integer and $N \geq 2$;
collecting, via a controller of the PDU, the sensed power measurement data from the plurality of power sensors;
predicting, via at least one Kalman filter (KF) of the controller and for at least one time t(M) of the time sequence corresponding to a line cycle, wherein M is an integer and $0 \leq M < N$, a power state of the plurality of end devices for a subsequent time t(M + 1), wherein the power state corresponds to a power draw capacity of the plurality of end devices relative to a total power draw capacity of the PDU;
updating, via the at least one KF, a Kalman gain, wherein the Kalman gain determines a relative weighting of the predicted power state and the power measurement data in determining an estimated power state for the at least one subsequent time t(M + 1);
receiving, via the at least one KF, the power measurement data corresponding to the at least one subsequent time t(M + 1); and
determining, via the at least one KF and based at least on the updated Kalman gain, the estimated power state for the at least one subsequent time t(M + 1).

11. The method of Clause 10, wherein updating the Kalman gain includes:
updating at least one tuning parameter of the at least one Kalman filter.
12. The method of Clause 11, wherein updating the at least one tuning parameter includes:
updating at least one Kalman filter coefficient of variation.
13. The method of Clause 11 or 12, wherein updating the Kalman gain includes:

updating the Kalman gain at each line cycle of the time sequence; band updating the at least one tuning parameter every P line cycles, wherein P is an integer and $P \geq 2 \leq P < N$.
14. The method of any one of Clauses 11-13, wherein determining the estimated power state for the at least one subsequent time t(M + 1) includes:
determining an estimated uncertainty of the estimated power state based on at least the updated tuning parameter.
15. The method of any one of Clauses 11-14, wherein determining the estimated power state for the at least one subsequent time t(M + 1) includes:
determining statistical data corresponding to the estimated power state, the statistical data including at least one of:

a minimum power draw;
a maximum power draw;
a mean power draw; or
a standard deviation based on the sensed power measurement data.

16. The method of any one of Clauses 10-15, wherein collecting the sensed power measurement data includes:
determining the sensed power measurement data according to at least one of a real power, an apparent power, a root mean square (RMS) current, or an RMS voltage.
17. The method of a y one of Clauses 10-16, further comprising:
presenting to at least one user the estimated power state for the at least one subsequent time t(M + 1).
18. The method of Clause 17, wherein presenting to at least one user the estimated power state for the at least one subsequent time t(M + 1) includes:
presenting the estimated power state for the at least one subsequent time t(M + 1) via a display unit coupled to the PDU.
19. The method of Clause 17, wherein presenting to at least one user the estimated power state for the at least one subsequent line cycle at the time t(M + 1) includes:
transmitting the estimated power state for the at least one subsequent time t(M + 1) to at least one remote user via a communications port of the PDU.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the scope of the subject matter described herein.

## Claims

**1.** A power distribution unit (PDU), comprising:

at least one power input connectible to an alternating current (AC) power source and configured to receive input power therefrom;
at least one power outlet, each power outlet electrically couplable to an end device of a plurality of connected end devices and configured for providing a power draw to the connected end device,
the at least one power outlet including at least one power sensor configured to sense the power draw to the connected end device at each of a time sequence of N consecutive line cycles,

wherein each line cycle corresponds to a time t(N),
and
wherein N is an integer and N ≥ 2;

a controller operatively coupled to the at least one power sensor, the controller including at least one processor;
and
a memory configured for storage of encoded instructions, the at least one processor configurable by the encoded instructions to:

receive power measurement data comprising the power draw sensed by each power sensor;
predict, via at least one Kalman filter (KF) configured for execution on the at least one processor and for at least one time t(M) of the time sequence, a power state of the plurality of end devices corresponding to a subsequent time t(M + 1),

wherein M is an integer and 0 ≤ M < N, and
wherein the power state corresponds to a power draw capacity of the plurality of end devices relative to a total power draw capacity of the PDU;

update, via the at least one KF, a Kalman gain, wherein the Kalman gain determines a relative weighting of the predicted power state and the sensed power measurement data in estimating the power state for the at least one subsequent time t (M + 1);
receiving, via the at least one KF, the power measurement data corresponding to the at least one subsequent time t(M + 1);
and
determining, via the at least one KF and based at least on the updated Kalman gain, the estimated power state corresponding to the at least one subsequent time t(M + 1).

**2.** The PDU of Claim 1, wherein the at least one processor is configurable via the encoded instructions for updating at least one tuning parameter of the at least one Kalman filter.

**3.** The PDU of Claim 2, wherein the at least one tuning parameter includes a coefficient of variation.

**4.** The PDU of Claim 2 or 3, wherein the at least one processor is configurable via the encoded instructions for:

updating the Kalman gain at each line cycle of the time sequence;
and
updating the at least one tuning parameter every P line cycles, wherein P is an integer and P ≥ 2.

**5.** The PDU of Claim 4, wherein the estimated power state includes an estimated uncertainty based on at least the updated tuning parameter.

**6.** The PDU of Claim 4, wherein the estimated power state includes statistical data, the statistical data including at least one of:

the updated tuning parameter;
a minimum power draw;
a maximum power draw;
a mean power draw;
or
a standard deviation associated with the power measurement data.

**7.** The PDU of Claim 1, wherein the sensed power measurement data includes at least one of a real power, an apparent power, a root mean square (RMS) current, or an RMS voltage; or optionally

further comprising:

at least one display unit coupled to the controller;
and
wherein the at least one display unit is configured to display the estimated power state corresponding to the at least one subsequent time t(M + 1); or optionally

further comprising:

at least one communications port coupled to the controller and to at least one network;
and

wherein the at least one communications port is configured to transmit the estimated power state corresponding to the at least one subsequent time t(M + 1) to at least one remote user via the at least one network.

8. A method for filtered visualization of dynamic load monitoring, the method comprising:

sensing, via a plurality of power sensors disposed within a power distribution unit (PDU) configured to supply operating power to a plurality of end devices electrically connected to the PDU, power measurement data comprising a power draw to each connected end device at each of a time sequence of N consecutive line cycles,

wherein each line cycle corresponds to a time t(N),
and
wherein N is an integer and N ≥ 2;

collecting, via a controller of the PDU, the sensed power measurement data from the plurality of power sensors;
predicting, via at least one Kalman filter (KF) of the controller and for at least one time t(M) of the time sequence corresponding to a line cycle, wherein M is an integer and 0 ≤ M < N, a power state of the plurality of end devices for a subsequent time t(M + 1), wherein the power state corresponds to a power draw capacity of the plurality of end devices relative to a total power draw capacity of the PDU;
updating, via the at least one KF, a Kalman gain, wherein the Kalman gain determines a relative weighting of the predicted power state and the power measurement data in determining an estimated power state for the at least one subsequent time t(M + 1);
receiving, via the at least one KF, the power measurement data corresponding to the at least one subsequent time t(M + 1);
and
determining, via the at least one KF and based at least on the updated Kalman gain, the estimated power state for the at least one subsequent time t(M + 1).

9. The method of Claim 8, wherein updating the Kalman gain includes:
updating at least one tuning parameter of the at least one Kalman filter.

10. The method of Claim 9, wherein updating the at least one tuning parameter includes:
updating at least one Kalman filter coefficient of variation.

11. The method of Claim 9, wherein updating the Kalman gain includes:

updating the Kalman gain at each line cycle of the time sequence;
and
updating the at least one tuning parameter every P line cycles, wherein P is an integer and P ≥2 ≤ P < N; or optionally

wherein determining the estimated power state for the at least one subsequent time t(M + 1) includes: determining an estimated uncertainty of the estimated power state based on at least the updated tuning parameter; or optionally
wherein determining the estimated power state for the at least one subsequent time t(M + 1) includes: determining statistical data corresponding to the estimated power state, the statistical data including at least one of:

a minimum power draw;
a maximum power draw;
a mean power draw;
or
a standard deviation based on the sensed power measurement data.

12. The method of Claim 8, wherein collecting the sensed power measurement data includes:
determining the sensed power measurement data according to at least one of a real power, an apparent power, a root mean square (RMS) current, or an RMS voltage.

13. The method of Claim 8, further comprising:
presenting to at least one user the estimated power state for the at least one subsequent time t(M + 1).

14. The method of Claim 13, wherein presenting to at least one user the estimated power state for the at least one subsequent time t(M + 1) includes:
presenting the estimated power state for the at least one subsequent time t(M + 1) via a display unit coupled to the PDU.

15. The method of Claim 13, wherein presenting to at least one user the estimated power state for the at least one subsequent line cycle at the time t(M + 1) includes:
transmitting the estimated power state for the at least one subsequent time t(M + 1) to at least one remote user via a communications port of the PDU.

FIG. 1

EP 4 749 396 A1

*FIG. 2*

EP 4 749 396 A1

FIG. 3

14

400

402

Sensing, via a plurality of power sensors disposed within a PDU configured to supply operating power to a plurality of end devices electrically connected to the PDU, power measurement data comprising a power draw to each connected end device at each of a time sequence of N consecutive line cycles, wherein each line cycle corresponds to a time t(N), and wherein N is an integer and N ≥ 2

404

Collecting, via a controller of the PDU, the sensed power measurement data from the plurality of power sensors

406

Predicting, via at least one Kalman filter (KF) of the controller and for at least one time t(M) of the time sequence corresponding to a line cycle, wherein M is an integer and 0 ≤ M < N, a power state of the set of end devices for a subsequent time t(M + 1), wherein the power state corresponds to a power draw capacity of the set of end devices relative to a total power draw capacity of the PDU

408

Updating, via the at least one KF, a Kalman gain, wherein the Kalman gain determines a relative weighting of the predicted power state and the power measurement data in determining an estimated power state for the at least one subsequent time t (M + 1);

## FIG. 4A

400

FIG. 4A

410

Receiving, via the at least one KF, the power measurement data corresponding to the at least one subsequent time t(M + 1);

412

Determining, via the at least one KF and based at least on the updated Kalman gain, the estimated power state for the at least one subsequent time t(M + 1).

414

Presenting to at least one user the estimated power state for the at least one subsequent time t(M + 1).

*FIG. 4B*

Europäisches Patentamt
European Patent Office
Office européen des brevets

# EUROPEAN SEARCH REPORT

**Application Number**

EP 25 21 8510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2018 302 723 A1 (TARGUS INTERNATIONAL LLC [US]) 13 February 2020 (2020-02-13) * the whole document * ----- | 1-15 | INV.<br>G06F1/26<br>G06F1/28 |
| X | US 2023/327438 A1 (KUMAR ADITYA [US] ET AL) 12 October 2023 (2023-10-12) * the whole document * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 10 April 2026 | Vieira, Alexandre |

EPO FORM 1503 03.82 (P04C01)

## ANNEX TO THE EUROPEAN SEARCH REPORT
## ON EUROPEAN PATENT APPLICATION NO.

EP 25 21 8510

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2026

| Patent document cited in search report | Publication date | Patent family member(s) | | Publication date |
|---|---|---|---|---|
| AU 2018302723 A1 | 13-02-2020 | AU | 2018302723 A1 | 13-02-2020 |
| | | AU | 2022204650 A1 | 21-07-2022 |
| | | AU | 2023219971 A1 | 14-09-2023 |
| | | CA | 3070570 A1 | 24-01-2019 |
| | | CN | 111066218 A | 24-04-2020 |
| | | CN | 118611262 A | 06-09-2024 |
| | | NZ | 761299 A | 28-04-2023 |
| | | NZ | 796987 A | 05-07-2024 |
| | | US | 2019025353 A1 | 24-01-2019 |
| | | US | 2019025354 A1 | 24-01-2019 |
| | | US | 2019025355 A1 | 24-01-2019 |
| | | WO | 2019018007 A1 | 24-01-2019 |
| US 2023327438 A1 | 12-10-2023 | NONE | | |

EPO FORM P0459

For more details about this annex : see Official Journal of the European Patent Office, No. 12/82

**EP 4 749 396 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63725274